(19) Europäisches Patentamt
European Patent Office
Office européen des brevets

(11) **EP 2 346 015 B1**

(12) **EUROPEAN PATENT SPECIFICATION**

(45) Date of publication and mention
of the grant of the patent:
**18.06.2014 Bulletin 2014/25**

(51) Int Cl.:
*G08G 1/16* (2006.01)   *B60R 1/00* (2006.01)
*B60R 11/02* (2006.01)   *G06T 1/00* (2006.01)
*H04N 7/18* (2006.01)   *G06K 9/00* (2006.01)

(21) Application number: **09821755.7**

(22) Date of filing: **08.10.2009**

(86) International application number:
**PCT/JP2009/005261**

(87) International publication number:
**WO 2010/047055 (29.04.2010 Gazette 2010/17)**

(54) **VEHICLE PERIPHERY MONITORING APPARATUS**

VORRICHTUNG ZUR ÜBERWACHUNG DER UMGEBUNG EINES FAHRZEUGS

DISPOSITIF POUR LA SURVEILLANCE DES ENVIRONS D'UN VEHICULE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.10.2008 JP 2008274483**

(43) Date of publication of application:
**20.07.2011 Bulletin 2011/29**

(73) Proprietor: **Honda Motor Co., Ltd.
Minato-ku
Tokyo 107-8556 (JP)**

(72) Inventors:
• **MATSUDA, Kodai
Wako-shi
Saitama 351-0193 (JP)**
• **NAGAOKA, Nobuharu
Wako-shi
Saitama 351-0193 (JP)**
• **TAKATSUDO, Izumi
Wako-shi
Saitama 351-0193 (JP)**

(74) Representative: **Prechtel, Jörg et al
Weickmann & Weickmann
Patentanwälte
Postfach 86 08 20
81635 München (DE)**

(56) References cited:
EP-A1- 1 160 550    EP-A1- 1 839 964
EP-A2- 0 468 474    JP-A- 2003 009 140
JP-A- 2003 016 458    JP-A- 2005 128 776
JP-A- 2006 101 384    JP-A- 2006 101 384
JP-A- 2007 264 732    JP-B2- 3 900 508
US-A- 5 196 703

## Description

Technical Field

The present invention relates to an apparatus for monitoring a periphery of a vehicle using an image captured by one or more infrared cameras, more specifically relates to a vehicle periphery monitoring apparatus for extracting an object by a binarization process of the captured image.

A vehicle surrounding information reporting device of the generic art capable of easy distinguishing a detection subject even if another heat source is present adjacent to the detection subject in the image is known from JP 3900508 B2. The device distinguishes a pedestrian from other heat sources in an image taken by infrared cameras by performing the following steps. In a first step the temperature of the heat sources present in the image is detected by means for detecting an outside temperature of the vehicle. In a subsequent step a prescribed threshold value temperature is set, based on calender information (season), time point information (morning, evening, or night) and atmospheric temperature. Subsequently image conversion processing is executed to display heat sources in the image over the threshold temperature in an emphasized fashion or to delete heat source above the threshold temperature from the image.

The device known from JP 3900508 B2 comprises means for detecting an outside temperature of the vehicle, temperature difference calculating means for calculating a temperature difference between the outside temperature and a surface temperature of the object, object luminance value determining means, and object extracting means for extracting the object by binarizing the captured image from the infrared camera by using the luminance value of the object as a threshold value.

In the following further relevant prior art will be discussed.

Background Art

Conventionally, an apparatus for capturing an image around a vehicle by an infrared camera that is mounted on the vehicle, and binarizing the captured image to extract an object having higher temperature such as a pedestrian and animal has been proposed. In the patent document 1 below, a method for generating a luminance histogram of an image captured by an infrared camera and determining a threshold value that divides the captured image into a background image and an object image based on the luminance histogram. Through a binarization process using such a threshold value, an object having higher temperature is distinguished and extracted from a background.

Patent Document 1: Japanese patent publication laid-open No. 2003-216949

A method for compensating scattered characteristics of infrared temperature detecting elements, to deal with the problem of offset in thermal imaging systems, is proposed in EP 0 468 474. A method for determining the intensity of the background flux associated with a scene from an acquired image is known from US 5,196,703.

Disclosure of the Invention

Problem to be Solved by the Invention

In addition to living bodies such as pedestrians and animals, artificial structures such as utility poles and walls may exist around a vehicle. In order to distinguish and extract living bodies such as pedestrians and animals from the background as higher temperature objects, it is desirable that such artificial structures are classified into the background in the binarization process. However, depending on the kinds and placement of the artificial structures and the environment such as temperature around the vehicle, the artificial structures may be classified into the higher temperature objects even if the above conventional method is used. Therefore, a technique for distinguishing and extracting a desired object from a background with better accuracy in the binarization process, independently of the environment around the vehicle, is desired.

Means for Solving Problem

According to one aspect of the present invention, there is provided an apparatus for monitoring a periphery of a vehicle according to claim 1. The vehicle periphery monitoring apparatus for monitoring a periphery of a vehicle using an image captured by an infrared camera mounted on the vehicle detects an outside temperature of the vehicle. A temperature difference between a surface temperature of an object estimated based on the outside temperature and the outside temperature is calculated. Based on a luminance value of the background in the captured image and a luminance difference corresponding to the temperature difference, a luminance value of an object in the captured image is determined. The captured image obtained by the infrared camera is binarized by using the luminance value of the object as a threshold value to extract the object.

A relationship between a surface temperature of an object and an outside temperature is previously determined, and hence the surface temperature can be estimated from the outside temperature. This invention is based on this findings. A temperature difference between the detected outside temperature and a surface temperature of an object estimated based on the outside temperature is calculated. Because the luminance value of the background can be considered as corresponding to the outside temperature, a luminance value corresponding to an object can be determined based on the luminance value of the background and a luminance difference corresponding to the temperature difference. By conducting the binarization using the luminance value thus determined as a threshold value, the object can be separated and extracted well from the background portion that is other than the object. For example, when a pedestrian is extracted as an object, it is prevented that an object such as an artificial structure is erroneously extracted, by previously determining a relationship between the surface temperature of the pedestrian and the outside temperature.

Other features and advantages of the present invention will be apparent from the following detailed description of the present invention and the accompanying drawings.

Brief Description of the Drawings

Figure 1 is a block diagram showing a structure of a periphery monitoring apparatus in accordance with one embodiment of the present invention;

Figure 2 is a diagram for explaining an attachment position of cameras in accordance with one embodiment of the present invention;

Figure 3 is a flowchart of a process by an image processing unit in accordance with one embodiment of the present invention;

Figure 4 indicates a map for defining a relationship between an outside temperature and a surface temperature of an object in accordance with one embodiment of the present invention;

Figure 5 is a diagram for explaining an establishment of threshold values for a binarization process in accordance with one embodiment of the present invention;

Figure 6 shows a comparison between a conventional binary image and a binary image according to one embodiment of the present invention;

Figure 7 is a diagram for explaining an estimation of a size of an object in a captured image in accordance with one embodiment of the present invention;

Figure 8 is a diagram for explaining a setting of an object region and an object determination in accordance with one embodiment of the present invention;

Figure 9 is a diagram for explaining another technique for setting an object region in accordance with one embodiment of the present invention; and

Figure 10 is a diagram for explaining a technique for establishing threshold values for a binarization process using a road surface temperature in accordance with one embodiment of the present invention.

Detailed Description of the Invention

Preferred embodiments of the present invention will be described referring to the attached drawings.

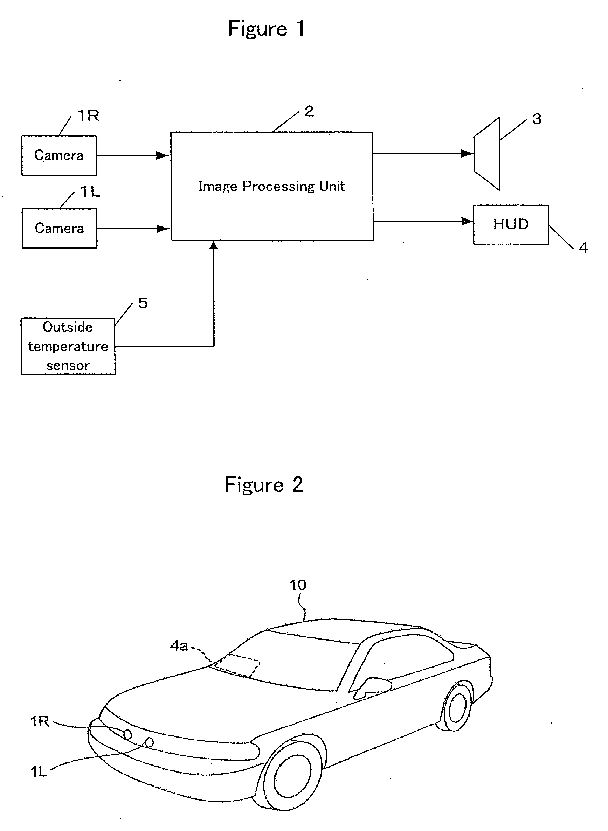

Figure 1 is a block diagram showing a structure of a periphery monitoring apparatus of a vehicle in accordance with one embodiment of the present invention. The apparatus is mounted on the vehicle and comprises two infrared cameras 1R, 1L capable of detecting far-infrared rays, a sensor 5 for detecting an outside temperature in a periphery of the vehicle, an image processing unit 2 for detecting an object in front of the vehicle based on image data obtained by the cameras 1R, 1L, a speaker 3 for issuing a warning with voice based on the detected result, and a head-up display (hereinafter referred to as a "HUD") 4 for displaying an image obtained by the camera 1R or 1L and outputting a display to cause a driver of the vehicle to recognize the object in front of the vehicle.

As shown in Figure 2, the cameras 1R, 1L are arranged in a front portion of the vehicle 10 at locations symmetric with respect to the longitudinal central axis of the vehicle 10, and rigidly fixed to the vehicle such that the two cameras 1R, 1L have optical axes in parallel with each other and equal heights from a road surface. The infrared cameras 1R, 1L have a characteristic that the output signal level becomes higher (that is, the luminance in a captured image becomes larger) as the temperature of the object becomes higher.

The image processing unit 2 includes an A/D converter circuit for converting input analog signals to digital signals, an image memory for storing digitized image signals, a CPU (central processing unit) for carrying out arithmetic operations, a RAM (Random access memory) used by the CPU for storing data being processed in the arithmetic operations, a ROM (Read Only memory) storing programs executed by the CPU and data (including tables and maps) to be used by the programs, and an output circuit for outputting driving signals to the speaker 3, display signals to the HUD 4, and the like. Output signals from the cameras 1R, 1L and the sensor 5 are converted to digital signals and input into the CPU. As shown in Figure 2, the HUD 4 is arranged such that a screen 4a thereof is displayed in a front window at a location ahead of the driver. Thus, the driver can view the screen displayed on the HUD 4.

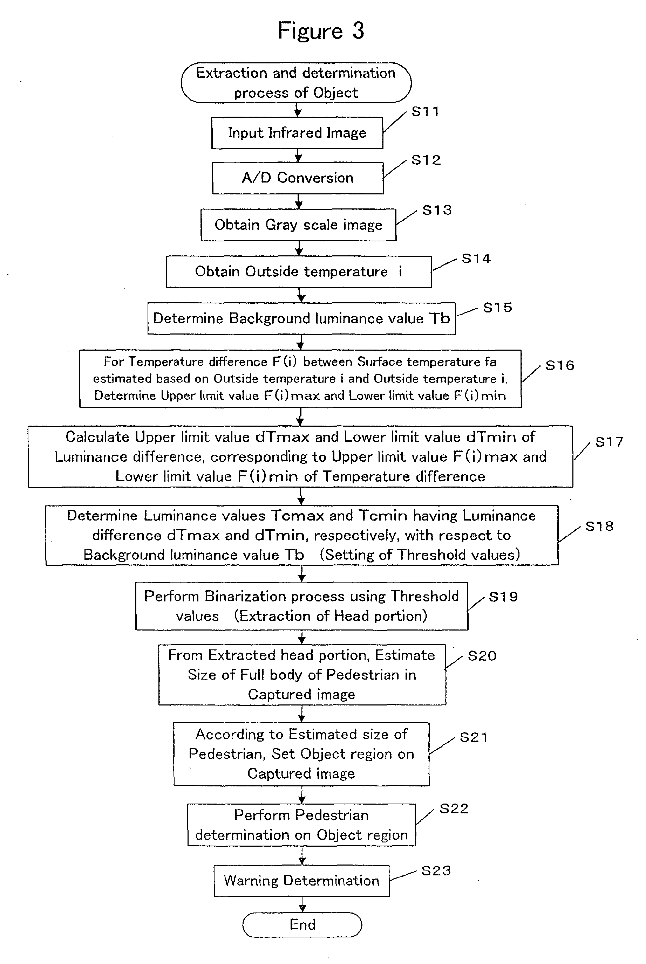

Figure 3 is a flowchart of a process executed by the image processing unit 2. This process is executed at predetermined time intervals.

In steps S11 through S13, output signals (that is, data of captured images) from the cameras 1R, 1L are received, A/D converted and stored in the image memory. Data of images thus stored are gray scale images having luminance values information.

The following steps S14 through S19 are a process for distinguishably extracting a desired object from the background in a binarization process. This embodiment will be described for a case where the desired object is a pedestrian.

In step S14, an outside temperature i (°C) detected by the outside temperature sensor 5 is obtained. In step S15, a luminance value Tb of the background is determined.

In this embodiment, a luminance value histogram is created based on the gray scale image. A luminance value having the highest frequency is used as the luminance value Tb of the background. This is because an area occupied by the background is generally largest in the captured image.

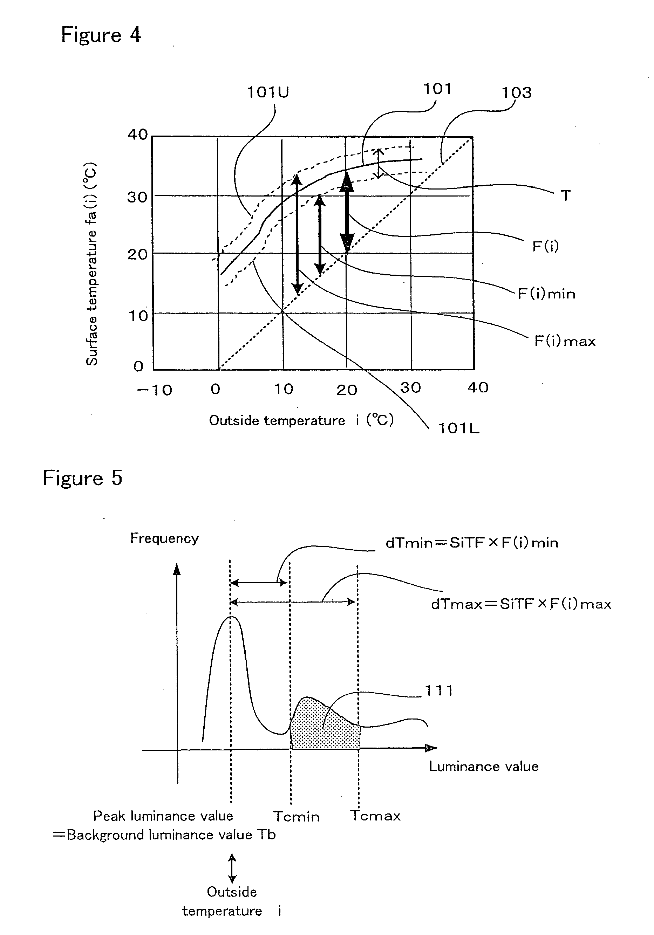

In step S16, a map as shown in Figure 4 is referred to based on the detected outside temperature i. Here, the map will be described. In the head portion of a pedestrian, the skin of the face is generally exposed to the air, and hence the head portion has almost nothing that blocks the heat source. Therefore, the present invention focuses on the surface of the head portion that is exposed to the air. As a result of examining a relationship between the temperature of the surface of the head portion (hereinafter referred to as surface temperature) fa (°C) and the outside temperature i (°C) through experiments or simulations, it was found that there is a relationship as shown in Figure 4 between the both. In the figure, the horizontal axis indicates the outside temperature i (°C) whereas the vertical axis indicates the surface temperature fa (°C). As shown in this figure, the surface temperature fa can be estimated from the outside temperature i.

The surface temperature fa changes as indicated by a curve 101 with respect to the outside temperature i. The surface temperature fa is higher as the outside temperature i is higher. For a given outside temperature i, a difference of the surface temperature fa(i) with respect to the outside temperature i is indicated by a difference between the curve 101 and a line 103 (which is a straight line indicating fa=i), and is referred to as a surface temperature difference, which is represented by F(i). That is, F(i) = surface temperature fa(i) - outside temperature i. As shown in the figure, there is a tendency that the surface temperature difference F(i) is smaller as the outside temperature i is higher.

In order to improve the accuracy of extracting an object, a predetermined margin range T (°C) with respect to F(i) is set in this embodiment. An upper limit of the margin range is indicated by a dotted line 101U. A difference between the upper limit and the outside temperature i is represented by F(i)max. A lower limit of the margin range is indicated by a dotted line 101L. A difference between the lower limit and the outside temperature i is represented by F(i)min.

The map as shown in Figure 4 is pre-stored in a memory of the image processing unit 2. The image processing unit 2 refers to the map based on the detected outside temperature i (°C) to determine a surface temperature fa corresponding to the outside temperature i. The processing unit 2 calculates a surface temperature difference F(i) between the surface temperature fa and the outside temperature i, and uses the margin range T to calculate an upper limit value F(i)max and a lower limit value F(i)min with respect to the surface temperature difference F(i). Here, the margin range T may be changed in accordance with the outside temperature i or may be constant.

Alternatively, the upper limit value F(i)max and the lower limit value F(i)min for the surface temperature difference F(i) corresponding to each outside temperature i may be stored in a memory. In this case, determining the surface temperature fa from the outside temperature i can be skipped. The upper limit value F(i)max and the lower limit value F(i)min can be directly determined from the outside temperature i.

Referring back to Figure 3, in step S17, a luminance difference corresponding to the upper limit value F(i)max and the lower limit value F(i)min of the surface temperature difference F(i) is calculated. A ratio of a change in the luminance value with respect to a change in the temperature is predetermined according to the specification of the infrared camera. Such a ratio is represented by a parameter SiTF. Thus, an upper limit value dTmax and a lower limit value dTmin of the luminance difference corresponding to the upper limit value F(i)max and the lower limit value F(i)min of the surface temperature difference F(i) are calculated as shown in the equation (1).

$$dTmax = SiTF \times F(i)max$$

$$dTmin = SiTF \times F(i)min \qquad (1)$$

In step S18, a threshold value for the binarization process is determined. Referring to Figure 5, one example of a luminance value histogram for the gray scale image obtained in step S13 is shown. As described above, in step S15, a luminance value having the highest frequency (peak luminance value) is set in the luminance value Tb of the background. Therefore, as shown in the following equation (2), a luminance value Tcmax of the surface temperature having the upper limit value F(i)max of the surface temperature difference with respect to the outside temperature i has the upper limit value dTmax of the luminance difference with respect to the background luminance value Tb. Similarly, a luminance value Tcmin of the surface temperature having the lower limit value F(i)min of the surface temperature difference with respect to the outside temperature i has the lower limit value dTmax of the luminance difference with respect to the background luminance value Tb.

$$Tcmax = Tb + dTmax$$
$$Tcmin = Tb + dTmin \qquad (2)$$

The upper limit luminance value Tcmax and the lower limit luminance value Tcmin are set in the threshold values for the binarization process. A region 111 defined by these two threshold values is shown in Figure 5. The region 111 is a luminance region of an object to be extracted.

In step S19, by using the threshold values thus set in step S18, the binarization process is applied to the gray scale image obtained in step S13 (in this embodiment, the image captured by the camera 1R is used, but alternatively, the image captured by the camera 1L may be used). For each pixel in the captured image, when a luminance value of the pixel is within the luminance region 111, the pixel is set to a white region having a value of 1 because the pixel is determined as constituting an object to be extracted. When a luminance value of the pixel is not within the luminance region 111, the pixel is set to a black region having zero because the pixel is determined as constituting the background.

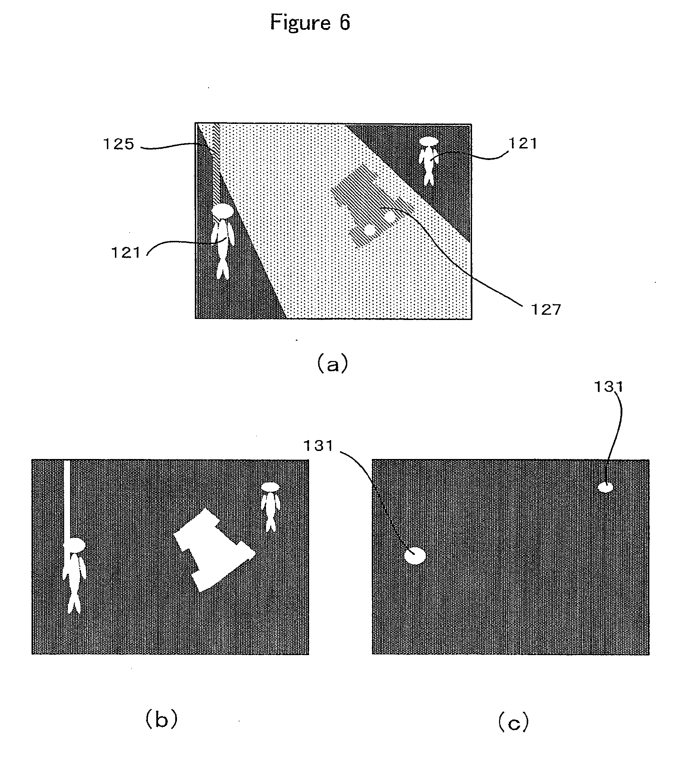

Here, referring to Figure 6, a diagram that schematically represents images is shown. (a) indicates a gray scale image (captured image), where differences in the gradation are represented by different types of hatching. (b) indicates an image obtained by the binarization process according to a conventional method. (c) indicates an image obtained by the binarization process using the above-described method shown in steps S14 through S19. In the figure, the black region is represented by a hatched region.

In the gray scale image, in addition to a pedestrian 121, artificial structures such as an electric pole 125 and an automobile 127 are captured. According to a conventional method, not only a pedestrian but also these artificial structures 125 and 127 may be extracted as an object or a white region, as shown in (b), depending on threshold values used in the binarization.

In contrast, according to the above technique of the present invention, the surface temperature of an object (in this embodiment, a pedestrian) with respect to the outside temperature is estimated, and a luminance region of the object is established based on a temperature difference of the estimated surface temperature with respect to the outside temperature. Therefore, only a head portion of the pedestrian 121 can be extracted as shown by the white region 131 of (c) (this region is referred to as a head portion region, hereinafter). Even when the artificial structure 125 and the pedestrian 121 are overlapped in the captured image as shown in (a), only the pedestrian 121 can be easily extracted as shown by the white region 131 of (c). Thus, according to the present invention, an object can be better distinguished and extracted from the background portion that is other than the object.

Referring back to Figure 3, in step S20, a size of the full-body of the pedestrian is estimated based on the extracted head portion region. This estimation can be implemented by any technique. Here, one example of the estimation technique will be specifically described.

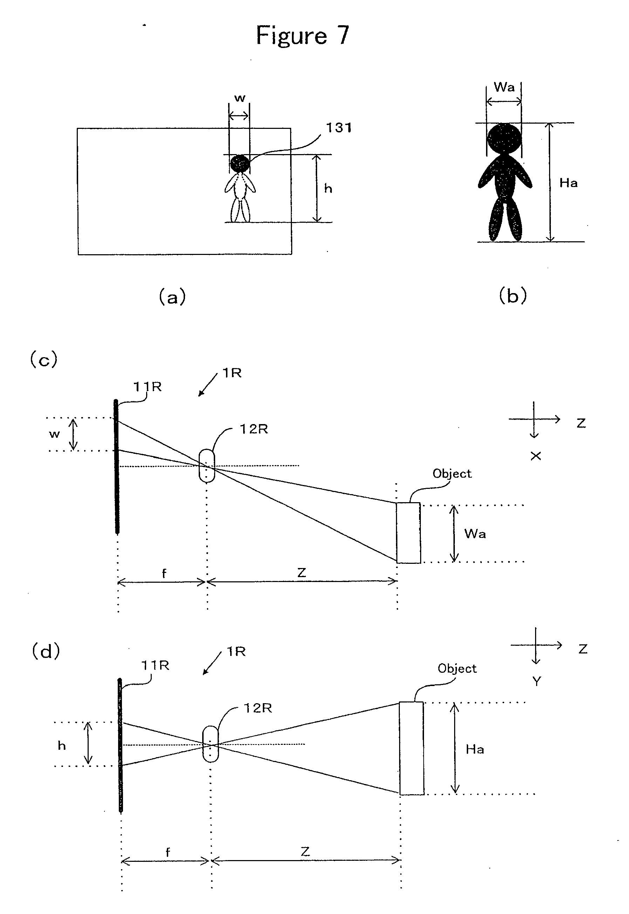

Referring to Figure 7(a), the head portion region extracted in the binary image is represented by a black region. The width of the head portion region is w (expressed in terms of the number of pixels). The width w is calculated by, for example, setting a rectangle circumscribing the head portion region and calculating the width of the rectangle. Portions other than the head of the pedestrian are indicated by the dotted lines, which have not yet been extracted. In step S20, the aim is to estimate the height h

(expressed in terms of the number of pixels) of the pedestrian in the captured image.

In order to achieve this estimation, a general size of a pedestrian in the real space, that is, the width Wa of the head and the height Ha are predetermined. Wa and Ha may be set based on the average value for adults (for example, Wa is 20 centimeters and Ha is a value within a range from 160 to 170 centimeters).

Furthermore, (c) is a diagram where a placement relationship between the camera 1R and the object is represented on an XZ plane. (d) is a diagram where a placement relationship between the camera 1R and the object is represented on a YZ plane. Here, X indicates a direction of the width of the vehicle 10. Y indicates a direction of the height of the vehicle 10. Z indicates a direction of a distance from the vehicle 10 to the object. The camera 1R comprises an imaging element 11R and a lens 12R. f indicates a focal distance of the lens 12R.

Let the distance to the object be Z (centimeters). From the diagram of (c), the distance Z is calculated as shown by the equation (3). Here, pcw indicates an interval between pixels in X direction, that is, a length (centimeters) per pixel in X direction.

$$Z = Wa \times f/(w \times pcw) \qquad (3)$$

From the diagram of (d), the height h (centimeters) of the pedestrian in the captured image is calculated using the distance Z, as shown by the equation (4). Here, pch indicates an interval between pixels in Y direction, that is, a length (centimeters) per pixel in Y direction.

$$h = (Ha/pch) \times f/Z \qquad (4)$$

Thus, the size of the pedestrian in the captured image can be estimated as having the width w and the height h. Alternatively, the fact that the width of the body is generally larger than the width of the head can be taken into account. In this case, a value obtained by adding a predetermined margin value to the width w of the head portion region may be used in place of the above-described width w.

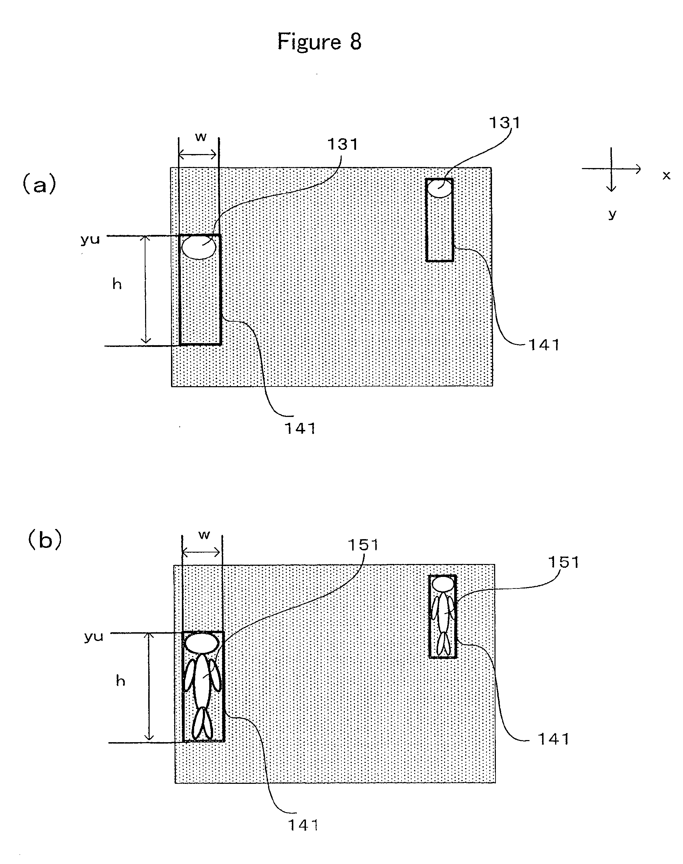

Referring back to Figure 3, in step S21, an object region is set on the captured image (may be the gray scale image, or the binary image) according to the size of the pedestrian estimated in step S20. Here, referring to Figure 8(a), the head portion region 131 extracted as described above is shown. As indicated by the bold frame, an object region 141 that has the width w of the head portion region 131 and the height h from the top (y coordinate value is yu in the figure) of the head portion region 131 is set. Thus, the position of the object in the captured image is identified.

Referring back to Figure 3, in this embodiment, the step S22 is performed, in which an object determination process is performed on the object region 141 thus set to determine whether the object captured in the object region 141 is a pedestrian or not. An arbitrary appropriate object determination technique, for example, using a well known shape matching method, can be used to determine a pedestrian (for example, see Japanese patent publication laid-open 2007-264778). This process is performed using the gray scale image. In Figure 8(b), the pedestrian 151 whose shape is thus determined is shown.

If the object is determined as a pedestrian in step S22, the process proceeds to step S23 where a warning determination process is performed. In this process, it is determined whether a warning should be actually output or not to a driver. If the result of this determination is affirmative, the warning is output.

For example, it is determined whether a brake operation is being performed by a driver of the vehicle from the output of a brake sensor (not shown in the figure). If the brake operation is not being performed, the warning may be output. The warning output may be implemented by issuing a warning with voice through the speaker 3 while displaying the image obtained by, for example, the camera 1R on the screen 4a in which the pedestrian is emphatically displayed. The emphatic display is implemented by any technique. For example, the object is emphatically displayed by surrounding the object by a colored frame. Thus, the driver can more surely recognize the pedestrian in front of the vehicle. Alternatively, any one of the warning voice and the image display may be used to implement the warning output.

As another method of the step S20, for example, the height h of the pedestrian in the captured image may be calculated from a height of the head portion region (a height of the rectangle circumscribing the head portion region 131 can be used and is expressed in terms of the number of pixels) and the number of heads tall. For example, if the height of the head portion region 131 is hb and the average height for adults is seven-heads tall, then the height h of the pedestrian can be estimated as h=7xhb.

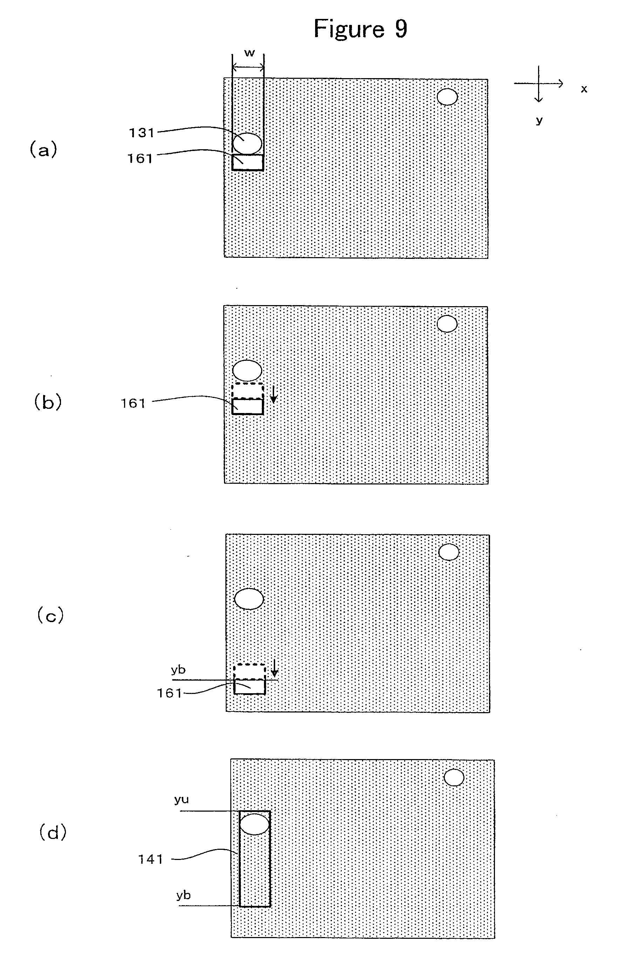

As yet another method of steps S20 and S21, a method for determining a road surface from luminance values in a region below the head portion region 131 to identify the object region 141 may be employed. This method will be briefly described referring to Figure 9. (a) is a gray scale image (regions other than the head portion region 131 are omitted in the figure). A mask 161 having a predetermined size is set below the extracted head portion region 131. The variance of luminance values in a region covered by the mask is calculated (alternatively, the standard deviation that is the square root of the variance may be used in place of the variance). It can be considered that the road surface is captured as an image region whose luminance values are almost uniform. Therefore, If the variance is higher than a predetermined value, it is determined that the region on which the mask is set is not the road surface. The mask 161 is moved downward as shown in (b) and the variance of a region covered by the mask is calculated again. This process is repeated while moving the mask 161 downward. If a region covered by the mask 161 includes only the road surface, the variance presents a low value. As shown in (c), if the position of the mask 161 where the variance becomes lower than the predetermined value, a boundary (y coordinate value is yb) between the position of the mask 161 and the previous position (indicated by the dotted line) of the mask 161 can be determined as a bottom edge of the object region 141. Thus, the object region 141 having the width w and the height from the top (y coordinate value is yu) of the head portion region to the boundary is extracted.

In the above embodiments, a luminance value having the highest frequency in the luminance value histogram is set in the luminance value Tb of the background, which is brought into correspondence with the outside temperature. Alternatively, the outside temperature and the temperature of the road surface may be distinguished to determine the luminance value Tb of the background. More specifically, in the case where the camera is placed in the front portion of the vehicle as shown in Figure 2, because an area occupied by the road surface in the captured image is larger, a luminance value having the highest frequency can be generally brought into correspondence with the temperature of the road surface. Therefore, a relationship between the temperature of the road surface and the outside temperature is predetermined in a map (not shown), which is stored in a memory. This relationship may be obtained by experiments and/or simulations.

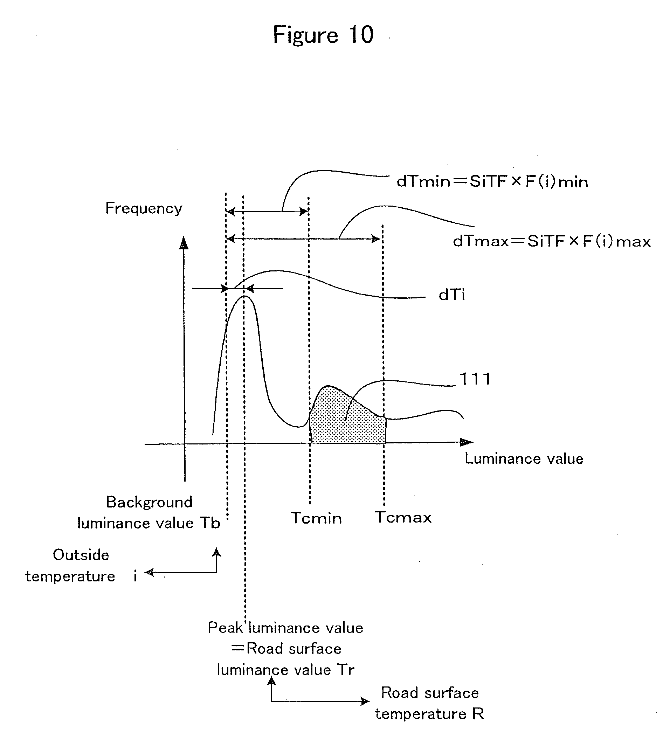

The map is referred to based on the detected outside temperature i to determine a corresponding temperature R of the road surface. A temperature difference between the road surface temperature R and the outside temperature i is calculated. The parameter SiTF as described above is used to convert the temperature difference into a luminance difference dTi. Here, referring to Figure 10, a luminance value histogram similar to Figure 5 is shown. A luminance value Tr having the highest frequency is brought into correspondence with the road surface temperature R. Because the temperature R of the road surface is generally higher than the outside temperature i, the calculated luminance difference dTi is subtracted from the luminance value Tr of the road surface to calculate a luminance value corresponding to the outside temperature i. The luminance value thus calculated is set in the background luminance value Tb in step S15 of Figure 3. In a case where the outside temperature i is higher than the road surface temperature R, the luminance difference dTi is added to the road surface luminance value Tr to calculate the luminance value Ti corresponding to the outside temperature. The luminance region 111 of the object is identified by the luminance values Tcmax and Tcmin having the luminance difference dTmax and dTmin, respectively, with respect to the luminance value Tb of the background. Thus, by distinguishing between the outside temperature and the road surface temperature, the luminance value of the background can be more accurately determined. Therefore, the threshold values used for the binarization process can be more appropriately established, thereby improving the accuracy of extracting the object.

More preferably, because the temperature difference between the road surface temperature and the outside temperature may vary depending on a value of one or more external environment parameters such as a weather condition (sunny or not, wind speed, amount of rainfall, etc.) and/or time passed from sunset, a map may be created and stored for each value of a predetermined external environment parameter. A map according to the external environment parameter value on that day is selected and used.

Similarly, the map of Figure 4 may be established for each value of the external environment parameter such as a weather condition and stored in a memory. For example, a map for a day where the wind speed is greater than a predetermined value and a map for a day where the wind speed is not greater than the predetermined value are separately created and stored. A map according to the wind speed on that day may be selected and used.

In the above embodiments, the upper limit value F(i)max and the lower limit value F(i)min that define the margin range T are established for the surface temperature difference F(i) as described referring to Figure 4. By establishing such a margin range, the threshold values for the binarization process can be set such that an object is more surely and accurately extracted. However, alternatively, without establishing such a margin range T, the luminance difference dT corresponding to the surface temperature difference F(i) is calculated, and the luminance difference dT is added to the background luminance Tb to calculate the luminance value Tc of the object. Pixels having a luminance value that matches the luminance value Tc are determined as indicating an object and hence are set to a white region. Pixels having a luminance value that does not match the luminance value Tc are determined as not indicating an object and hence are set to a black region. Furthermore, a predetermined range with respect to the luminance value Tc may be set to a luminance region of the object.

In the above embodiments, a case where an object to be extracted in the binarization process is a pedestrian is described as one example. Alternatively, an object to be extracted may be another living body such as an animal. For example, a map as shown in Figure 3 may be previously created for a predetermined animal via experiments and/or simulations. The map may be used to set threshold values for the binarization process as described above. In the case of an animal, its full-body is often exposed to the air. Therefore, the steps S20 and S21 may be skipped. In step S22, for example, a shape determination is performed on a region extracted in step S19 to determine whether an object is an animal or not. If it is determined that the object is an animal, a warning determination is made.

The present invention is applicable to an object having a surface temperature that can be pre-defined with respect to the outside temperature via experiments and/or simulations as shown by a map of Figure 3. Therefore, the present invention is not necessarily limited to a living body such as a human being and animal.

## Claims

1. An apparatus for monitoring a periphery of a vehicle using an image captured by an infrared camera mounted on the vehicle and extracting an object from the image, wherein a relationship between a surface temperature of the object and an outside temperature is pre-defined via experiments and/or simulations, the apparatus comprising:

   means for detecting an outside temperature of the vehicle;
   temperature difference calculating means for calculating a temperature difference between the outside temperature and a surface temperature of the object estimated from the outside temperature, based on the pre-defined relationship;
   object luminance value determining means for determining a luminance value of the object in the captured image by adding a luminance difference corresponding to the temperature difference to a luminance value (Tb) of a background in the captured image; and
   object extracting means for extracting the object by binarizing the captured image from the infrared camera by using the luminance value of the object as a threshold value,
   wherein a luminance value histogram is created based on a gray scale image of the captured image and a luminance value having the highest frequency is used as the luminance value (Tb) of the background.

2. The apparatus of claim 1, further comprising:

   means for estimating a road surface temperature based on the outside temperature; and
   means for determining a luminance value corresponding to the outside temperature by correcting a luminance value having a highest frequency in a luminance value histogram of the captured image based on a luminance difference corresponding to a temperature difference between the road surface temperature and the outside temperature,
   wherein the luminance value corresponding to the outside temperature is set in the luminance value of the background.

3. The apparatus of claim 1 or 2, wherein the object is a living body,
   further comprising living body temperature estimating means for estimating a surface temperature of the living body based on the outside temperature; and
   wherein the temperature difference calculating means calculates, as the temperature difference between the surface temperature of the object and the outside temperature, a temperature difference between the estimated surface temperature of the living body and the outside temperature,
   wherein the temperature difference between the estimated surface temperature of the living body and the outside temperature is determined such that the temperature difference is smaller as the outside temperature is higher.

## Patentansprüche

1. Vorrichtung zur Überwachung einer Umgebung eines Fahrzeugs unter Verwendung eines von einer an dem Fahrzeug angebrachten Infrarotkamera aufgenommenen Bildes und Extrahieren eines Objekts von dem Bild, wobei eine Beziehung zwischen einer Oberflächentemperatur von dem Objekt und einer Außentemperatur vermittels Experimenten und/oder Simulationen vordefiniert ist, wobei die Vorrichtung umfasst:

   ein Mittel zur Erfassung einer Außentemperatur des Fahrzeugs;
   ein Temperaturdifferenz-Berechnungsmittel zur Berechnung einer Temperaturdifferenz zwischen der Außentemperatur und einer Oberflächentemperatur von dem Objekt, welche aus der Außentemperatur abgeschätzt wird, basierend auf der vordefinierten Beziehung;
   ein Objekt-Luminanzwert-Bestimmungsmittel zur Bestimmung eines Luminanzwerts von dem Objekt in dem aufgenommenen Bild durch Hinzufügen einer Luminanzdifferenz entsprechend der Temperaturdifferenz zu einem Luminanzwert (Tb) von einem Hintergrund in dem aufgenommenen Bild; und
   ein Objekt-Extraktionsmittel zum Extrahieren des Objekts durch eine Binarisierung des von der Infrarotkamera aufgenommenen Bildes unter Verwendung des Luminanzwerts von dem Objekt als einem Schwellenwert,
   wobei ein Luminanzwert-Histogramm basierend auf einem Graustufenbild von dem aufgenommenen Bild erzeugt wird und ein Luminanzwert, welcher die höchste Frequenz hat, als der Luminanzwert (Tb) von dem Hintergrund verwendet wird.

**2.** Vorrichtung nach Anspruch 1, ferner umfassend:

ein Mittel zum Abschätzen einer Temperatur einer Straßenoberfläche basierend auf der Außentemperatur; und ein Mittel zum Bestimmen eines Luminanzwerts entsprechend der Außentemperatur durch eine Korrektur eines Luminanzwerts, welcher eine höchste Frequenz hat, in einem Luminanzwert-Histogramm von dem aufgenommenen Bild basierend auf einer Luminanzdifferenz entsprechend einer Temperaturdifferenz zwischen der Temperatur der Straßenoberfläche und der Außentemperatur, wobei der Luminanzwert, welcher der Außentemperatur entspricht, in den Luminanzwert von dem Hintergrund eingesetzt wird.

**3.** Vorrichtung nach Anspruch 1 oder 2, wobei das Objekt ein lebendiger Körper ist, ferner umfassend ein lebendiger Körper-Temperatur-Abschätzungsmittel zum Abschätzen einer Oberflächentemperatur von dem lebendigen Körper basierend auf der Außentemperatur; und wobei das Temperaturdifferenz-Berechnungsmittel als die Temperaturdifferenz zwischen der Oberflächentemperatur von dem Objekt und der Außentemperatur eine Temperaturdifferenz zwischen der abgeschätzten Oberflächentemperatur von dem lebendigen Körper und der Außentemperatur berechnet, wobei die Temperaturdifferenz zwischen der abgeschätzten Oberflächentemperatur von dem lebendigen Körper und der Außentemperatur derart bestimmt wird, dass die Temperaturdifferenz kleiner ist, wenn die Außentemperatur höher ist.

## Revendications

**1.** Un dispositif de surveillance de la périphérie d'un véhicule par utilisation d'une image saisie par une caméra infrarouge montée sur le véhicule et par extraction d'un objet de l'image, dans lequel une relation entre une température de surface de l'objet et une température extérieure est préalablement définie par des expériences et/ou des simulations, le dispositif comprenant :

des moyens de détection d'une température extérieure du véhicule ; des moyens de calcul d'une différence de température pour calculer une différence de température entre la température extérieure et une température de surface de l'objet, estimée à partir de la température extérieure, sur la base de la relation préalablement définie ; des moyens de détermination de la valeur de luminance d'un objet pour déterminer une valeur de luminance de l'objet dans l'image saisie par addition d'une différence de luminance correspondant à la différence de température à une valeur de luminance (Tb) d'un arrière-plan dans l'image saisie ; et des moyens d'extraction d'un objet pour extraire l'objet par binarisation de l'image saisie de la caméra infrarouge en utilisant la valeur de luminance de l'objet comme une valeur seuil, dans lequel un histogramme de valeurs de luminance est créé sur la base d'une image en échelle de gris de l'image saisie et une valeur de luminance possédant la fréquence la plus élevée est utilisée comme la valeur de luminance (Tb) de l'arrière-plan.

**2.** Le dispositif selon la revendication 1, comprenant par ailleurs :

des moyens d'estimation d'une température de la surface de la route sur la base de la température extérieure ; et des moyens de détermination d'une valeur de luminance correspondant à la température extérieure par correction d'une valeur de luminance possédant la fréquence la plus élevée dans un histogramme de valeurs de luminance de l'image saisie sur la base d'une différence de luminance correspondant à une différence de température entre la température de la surface de la route et la température extérieure, dans lequel la valeur de luminance correspondant à la température extérieure est réglée dans la valeur de luminance de l'arrière-plan.

**3.** Le dispositif selon l'une des revendications 1 ou 2, dans lequel l'objet est un corps vivant, comprenant par ailleurs des moyens d'estimation de la température du corps vivant pour estimer une température de surface du corps vivant sur la base de la température extérieure ; et dans lequel les moyens de calcul de la différence de température calculent, comme la différence de température entre la température de surface de l'objet et la température extérieure, une différence de température entre la température de surface estimée du corps vivant et la température extérieure, dans lequel la différence de température entre la température de surface estimée du corps vivant et la température extérieure est déterminée de telle sorte que la différence de température soit inférieure lorsque la température extérieure est plus élevée.

# Figure 1

```
   ┌─1R                      ┌─2                        ┌─3
 ┌────────┐          ┌──────────────────────┐        ◁
 │ Camera │────────▶ │                      │──────▶
 └────────┘          │                      │
   ┌─1L              │ Image Processing Unit │        ┌──────┐
 ┌────────┐          │                      │──────▶ │ HUD  │
 │ Camera │────────▶ │                      │        └──────┘
 └────────┘          └──────────────────────┘            └─4
                              ▲
         ┌─5                  │
 ┌──────────────┐            │
 │   Outside    │            │
 │ temperature  │────────────┘
 │   sensor     │
 └──────────────┘
```

# Figure 2

# Figure 3

Extraction and determination
process of Object

Input Infrared Image — S11

A/D Conversion — S12

Obtain Gray scale image — S13

Obtain Outside temperature i — S14

Determine Background luminance value Tb — S15

For Temperature difference F(i) between Surface temperature fa
estimated based on Outside temperature i and Outside temperature i,
Determine Upper limit value F(i)max and Lower limit value F(i)min — S16

Calculate Upper limit value dTmax and Lower limit value dTmin of
Luminance difference, corresponding to Upper limit value F(i)max and
Lower limit value F(i)min of Temperature difference — S17

Determine Luminance values Tcmax and Tcmin having Luminance
difference dTmax and dTmin, respectively, with respect to
Background luminance value Tb (Setting of Threshold values) — S18

Perform Binarization process using Threshold
values (Extraction of Head portion) — S19

From Extracted head portion, Estimate
Size of Full body of Pedestrian in
Captured image — S20

According to Estimated size of
Pedestrian, Set Object region on
Captured image — S21

Perform Pedestrian
determination on Object region — S22

Warning Determination — S23

End

## Figure 4

## Figure 5

Figure 6

(a)

(b)                    (c)

# Figure 7

(a)

(b)

(c)

(d)

# Figure 8

(a)

(b)

# Figure 9

(a)

(b)

(c)

(d)

# Figure 10

dTmin＝SiTF × F(i)min

dTmax＝SiTF × F(i)max

dTi

111

Frequency

Luminance value

Background
luminance value Tb

Tcmin    Tcmax

Outside
temperature  i

Peak luminance value
＝Road surface
luminance value Tr

Road surface
temperature R

## REFERENCES CITED IN THE DESCRIPTION

**Patent documents cited in the description**

- JP 3900508 B
- JP 2003216949 A
- EP 0468474 A
- US 5196703 A
- JP 2007264778 A